# EUROPEAN PATENT SPECIFICATION

(11) **EP 4 270 192 B1**
(45) Date of publication and mention of the grant of the patent: **25.03.2026**
(21) Application number: 22170799.5
(22) Date of filing: 29.04.2022
(51) Int. Cl.: G06F 9/52, H04L 7/00, G06F 9/48, H04J 3/06, G06F 1/04, H04L 12/12

(54) **METHOD FOR SYNCHRONIZING A CLOCK-FREE COMPUTATIONAL NODE IN A VEHICLE, METHOD FOR PERFORMING AN ACTION AT A PRE-DEFINED TIME, FIRST COMPUTATIONAL NODE, SECOND COMPUTATIONAL NODE AND COMPUTATIONAL SYSTEM FOR A VEHICLE**
VERFAHREN ZUR SYNCHRONISIERUNG EINES TAKTFREIEN RECHENKNOTENS IN EINEM FAHRZEUG, VERFAHREN ZUR DURCHFÜHRUNG EINER AKTION ZU EINER VORDEFINIERTEN ZEIT, ERSTER RECHENKNOTEN, ZWEITER RECHENKNOTEN UND RECHENSYSTEM FÜR EIN FAHRZEUG
PROCÉDÉ DE SYNCHRONISATION D'UN NOEUD DE CALCUL SANS HORLOGE DANS UN VÉHICULE, PROCÉDÉ D'EXÉCUTION D'UNE ACTION À UN INSTANT PRÉDÉFINI, PREMIER NOEUD DE CALCUL, SECOND NOEUD DE CALCUL ET SYSTÈME DE CALCUL POUR UN VÉHICULE

(43) Date of publication of application: 01.11.2023
(73) Proprietor: Volvo Car Corporation, 40531 Göteborg (SE)
(72) Inventor: BERGSTRÖM, Mats, 40531 Göteborg (SE); FREDRIKSSON, John, 40531 Göteborg (SE)
(74) Representative: Maiwald GmbH

(56) References cited:
- EP-A1- 2 926 604
- EP-A2- 2 127 187
- US-A1- 2012 020 445

## Description

The present disclosure relates to a method for synchronizing a clock-free computational node in a vehicle such that the clock-free computational node is able to perform an action at a pre-defined time. The clock-free computational node comprises a counter unit being configured for producing a sequence of counter values according to a pre-defined set of rules.

The present disclosure is also directed to a method for performing an action at a pre-defined time using a clock-free computational node.

Furthermore, the present disclosure relates to a first computational node comprising a clock unit and a second computational node being clock-free.

Moreover, the present disclosure relates to a computational system for a vehicle. The computational system comprises a first computational node as mentioned above and at least one second computational node as mentioned above.

In computational systems of vehicles it may be important that the computational nodes of the system perform actions at a pre-defined time. This applies both with respect to a superordinate, general time and with respect to a relative time between a pair of nodes.

The computational nodes of such a computational system may for example be configured as sensor nodes or actuator nodes.

An example of such a computational system is an advanced driver assistance system of a vehicle.

If actions need to be performed at a pre-defined time, each node may be equipped with a clock unit such that a respective time information is available at each node.

However, this may conflict with the aim to enhance the computational efficiency and the structural simplicity of computational system for vehicles.

Beyond that, a multi-channel sensor measurement method and system is known from WO 2014/083236 A1, a system and method for bias and random delay cancellation is disclosed in WO 2008/107903A2, and wireless sensor synchronization methods are known from US 2012/0020445 A1.

The invention is defined by the independent claims. Particular embodiments are defined by the subject-matter of the dependent claims. In the following, the term "embodiment" is to be understood as an unclaimed example, unless it is directed to the subject-matter of the claims. It is therefore an objective of the present disclosure to provide a computational system for a vehicles which is structurally simple and computational efficient while at the same time the known functionality is not affected.

The problem is at least partially solved or alleviated by the subject matter of the independent claims of the present disclosure, wherein further examples are incorporated in the dependent claims.

According to a first aspect, there is provided a method for synchronizing a clock-free computational node in a vehicle using a computational node comprising a clock unit such that the clock-free computational node is able to perform an action at a pre-defined time. The clock-free computational node comprises a counter unit being configured for producing a sequence of counter values according to a pre-defined set of rules. The method comprises:
- receiving at least one current counter value at the computational node comprising the clock unit from the clock-free computational node,
- receiving at least one current time information from a clock unit of the computational node comprising the clock unit,
- generating a mapping between the at least one current counter value and the at least one current time information using the computational node comprising the clock unit,
- determining a pre-defined counter value being associated with the pre-defined time based on the mapping using the computational node comprising the clock unit, and
- providing the pre-defined counter value to the clock-free computational node.

Thus, using this method, a computational node which is equipped with a counter unit only, can nevertheless perform an action at a pre-defined time. In other words, a clock-free computational node can be enabled to perform timely actions without needing a clock unit. It is understood that at the time at which the method is performed, both the pre-defined time and the pre-defined counter value lie in the future. Since a counter unit is simpler than a clock unit, the method provides a high overall computational efficiency. At the same time, using the method, a computational system can be rendered structurally simple since a reduced number of clock units is necessary. The functionality is not changed with respect to a computational node comprising a clock unit. A vehicle in which such a method is performed, thus, may be operated in a computationally efficient manner.

It is understood that receiving at least one current counter value also comprises receiving a plurality of counter values. The plurality of counter values may be received over a certain time span.

Furthermore, it is understood that the at least one current time information may be received from a clock unit which forms part of the same computational node that performs the method. Alternatively, the current time information may be received from a clock unit being external to the computational node that performs the method. In the latter case, the clock unit needs to be communicatively connected to the computational node performing the method.

Analogously, receiving at least one current time information from a clock unit also comprises receiving a plurality of time information. The plurality of time information may be received over a certain time span.

As far as the counter unit is concerned, a set of rules may comprise event-based rules such that a counter impulse or value is produced as a function of an event. Alternatively or additionally, the set of rules may be interval based, i.e. a counter impulse or value may be produced after a certain interval which is estimated without using a clock unit.

In the present disclosure, a counter value and a counter impulse are synonyms.

In an example, generating a mapping between the at least one current counter value and the at least one current time information may comprise determining a number of counter impulses or counter values that corresponds to a given time unit, e.g. 1 second or 1 minute.

In another example, generating a mapping between the at least one current counter value and the at least one current time information may comprise applying a pattern recognition technique on the at least one current counter value. In doing so, a time needed for one instance of the pattern is determined based on the received at least one time information. Consequently, the time information can be mapped on the counter impulse pattern and also on each counter impulse or counter value of the pattern.

In an example, the method may be implemented as a protocol. This is a very simple and computationally efficient way of implementation.

In an example, the method further comprises receiving or generating an action identifier describing the action to be performed. Thus, the clock-free computational node can additionally be provided with an action identifier. This means that the clock-free computational node does not need to identify the action to be performed. Consequently, the clock-free computational node can be designed in a lean and simple manner.

In an example, the identifier describing an action to be performed may be provided by a library which additionally comprises further attributes of the action to be performed.

In an example, the method further comprises requesting the clock-free computational node to reset the counter unit. In doing so, one can make sure that the clock-free computational node operates at a well-defined and known condition at the moment of resetting the counter. When subsequently generating a mapping between the at least one current counter value and the at least one current time information, the accuracy of the mapping is increased. An example of resetting the counter is setting the counter to zero.

In an example, the method further comprises storing the received at least one current counter value. Thus, a history of counter values is generated. A time information may be attributed to each of the historic counter values. The stored counter values may be used for generating the mapping between the at least one current counter value and the at least one current time information. This further increases the accuracy of the mapping.

In an example, the method further comprises requesting the at least one current counter value from the clock-free computational node and determining a response time between requesting and receiving of the at least one current counter value from the clock-free computational node. The response time is an indication of the time delay caused by a data connection towards the clock-free computational node. Knowing the time delay is a basis for providing an accurate mapping between the at least one current counter value and the at least one current time information.

In an example, generating the mapping between the at least one current counter value and the at least one current time information incorporates the determined response time. In other words, a signal transportation time is considered in the mapping. Thus, an accuracy of the mapping is increased

According to a second aspect, there is provided a method for performing an action at a pre-defined time using a clock-free computational node. The clock-free computational node comprises a counter unit being configured for producing a sequence of counter values according to a pre-defined set of rules. The method comprises:
- receiving a pre-defined counter value being associated with the pre-defined time,
- comparing the pre-defined counter value to a current counter value, and
- performing the action if the current counter value equals or exceeds the pre-defined counter value.

Thus, the clock-free computational node performs the action as a function of a counter value. This is structurally and computationally efficient. At the same time, the pre-defined counter value corresponds to a pre-defined time. Thus, the action is performed at a pre-defined time. It is understood that at the time at which the pre-defined counter value is received, both the pre-defined time and the pre-defined counter value lie in the future. Consequently, the clock-free computational node can perform an action in a timely manner which usually is only possible using a computational node comprising a clock unit.

It is understood that in a case in which the current counter value is inferior to the pre-defined counter value no action is performed.

In an example, the method further comprises receiving an action identifier describing the action to be performed and performing the action corresponding to the action identifier. Thus, the clock-free computational node does not need to determine the action to be performed. The clock-free computational node can thus be designed in a lean and simple manner.

In an example, the method further comprises receiving a reset request and resetting the counter unit. Thus, the counter unit of the clock-free node can be put into a well-defined state upon request. Consequently, an accuracy of a mapping between the at least one current counter value and the at least one current time information is increased.

According to a third aspect, there is provided a first computational node comprising a clock unit and means for carrying out the method according to the present disclosure for synchronizing a clock-free computational node in a vehicle. Thus, such a first computational node is configured to trigger and/or control timely actions at at least one clock-free computational node. Moreover, such a first computational node is configured to trigger and/or control a plurality of actions at a plurality of clock-free computational nodes, wherein the actions are performed in a timely organized manner. The actions may also be performed in parallel, i.e. simultaneously.

It is understood that the designation of the computational node as a first computational node is done for the ease of explanation only and does not imply any number of computational nodes.

In the present context, a clock unit is to be understood as a device which is configured to provide a signal describing a time. The clock unit may comprise a quartz clock unit.

In an example, the first computational node is a central control node. Thus, the first computational node is configured to control actions being performed by other nodes being comprised by the same computational system or a different computational system.

In an example, the first computational node comprises a driver assistance control unit of a vehicle. Thus, the first computational node forms part of an advanced driver assistance system. Thus, the first computational node may be configured to perform or control at least one sensing action of an advanced driver assistance system. Alternatively or additionally, the first computational node may be configured to perform or control at least one actuation action of an advanced driver assistance system.

According to a fourth aspect, there is provided a second computational node being clock-free. The second computational node comprises a counter unit being configured for producing a sequence of counter values according to a pre-defined set of rules and means for carrying out the method according to the present disclosure for performing an action at a pre-defined time using a clock-free computational node. Such a second computational node is comparatively simple and may be operated in a comparatively efficient manner. The second computational node may perform actions in a manner usually reserved to computational nodes comprising a clock unit. Thus, a computational system can be simplified by using second computational nodes according to the present disclosure instead of known computational nodes comprising a clock unit. It is noted that such a second computational node can provide its functionalities with minimal computing capabilities.

It is understood that the designation of the computational node as a second computational node is done for the ease of explanation only and does not imply any number of computational nodes.

In an example, the second computational node comprises a sensor unit being configured to detect a drive state value describing a current drive state of a vehicle. Thus, the second computational node forms part of an advanced driver assistance systems. The drive state value can be detected in a simple and efficient manner. The detected drive state can provided in a timely and synchronized manner.

It is noted that, of course, a plurality of second computational nodes can be provided wherein each second computational node comprises a sensor unit. The detection results of such sensor units can as well be provided in a timely, synchronized manner.

In an example, the second computational node comprises an actuator unit being configured to influence a drive state of a vehicle. Again, the second computational node may form part of an advanced driver assistance systems. The actuator unit can be operated in a simple and efficient manner. Additionally, the actuator unit may be operated in a timely and synchronized manner.

In an example, the actuator unit is a drive motor unit, a steering actuator unit or a brake actuator unit. Thus, using the actuator unit, driving manoeuvers such as autonomous driving manoeuvers may be performed.

According to a fifth aspect, there is provided a computational system for a vehicle. The computational system comprises a first computational node according to the present disclosure and at least one second computational node according to the present disclosure. The first computational node is communicatively connected to each of the at least one second computational nodes. Such a computational system is simple in design and may be operated in a computationally efficient manner. This is especially the case if the number of first computational nodes is small as compared to the total number of computational nodes.

In an example, the computational system is a driver assistance control system of a vehicle.

In an example, the communicative connection is realized via a wired or wireless network. The communicative connection can be at least one of an Ethernet connection and a bus system connection, e.g. CAN bus.

It is noted that in a case in which the computational system comprises two or more second computational nodes, the first computational node can trigger and/or control a plurality of concurrent actions at the different second computational nodes. The actions may be performed in a timely organized and synchronized manner. The actions may also be performed in parallel.

The methods according to the present disclosure may be at least partly computer-implemented, and may be implemented in software or in hardware, or in software and hardware. Further, the methods may be carried out by computer program instructions respectively running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, there is provided a computer program comprising instructions which, when the computer program is executed by a computer, cause the computer to carry out the method for synchronizing a clock-free computational node in a vehicle. In this context, a computational node is to be seen as a computer.

According to an example, there is provided a computer-readable storage medium comprising instructions which, when executed by a computer, cause the computer to carry out the method for synchronizing a clock-free computational node in a vehicle. Again, a computational node is to be seen as a computer. The computer-readable storage medium may form part of the computational node.

According to an example, there is provided a computer program comprising instructions which, when the computer program is executed by a computer, cause the computer to carry out the method for performing an action at a pre-defined time using a clock-free computational node. In this context, a computational node is to be seen as a computer.

According to an example, there is provided a computer-readable storage medium comprising instructions which, when executed by a computer, cause the computer to carry out the method for performing an action at a pre-defined time using a clock-free computational node. Again, a computational node is to be seen as a computer. The computer-readable storage medium may form part of the computational node.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a computational system according to the present disclosure comprising one first computational node according to the present disclosure and two second computational nodes according to the present disclosure, wherein the first computational node and the second computational nodes are respectively configured to perform one of the methods according to the present disclosure,
- Figure 2: illustrates steps of a method according to the present disclosure for performing an action at a pre-defined time using a clock-free computational node, and
- Figure 3: illustrates steps of a method according to the present disclosure for synchronizing a clock-free computational node in a vehicle.

The figures are merely schematic representations and serve only to illustrate examples of the disclosure. Identical or equivalent elements are in principle provided with the same reference signs.

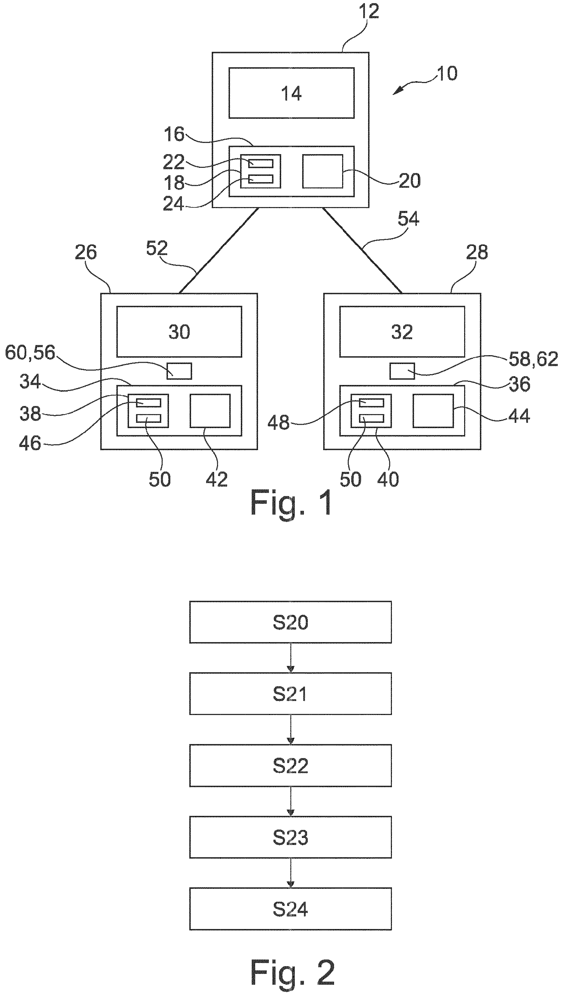

Figure 1 shows a computational system 10 of a vehicle.

The computational system 10 comprises one first computational node 12.

The first computational node 12 comprises a clock unit 14. Thus, in simplified words, the first computational node 12 has a perception of time.

Additionally, the first computational node 12 comprises means 16 for carrying out a method for synchronizing a clock-free computational node in the vehicle such that the clock-free computational node is able to perform an action at a pre-defined time. The method will be explained in detail further below.

The means 16 comprise a data storage unit 18 and a data processing unit 20, wherein the data storage unit 18 comprises a computer-readable storage medium 22 comprising instructions which, when executed by the data processing unit 20, cause the data processing unit 20 to carry out the method for synchronizing a clock-free computational node in the vehicle.

Additionally, there is provided a computer program 24 on the data storage unit 18 comprising instructions which, when the program is executed by the data processing unit 20, cause the data processing unit 20 to carry out the method for synchronizing a clock-free computational node in the vehicle.

The computational system 10 also comprises two second computational nodes 26, 28.

Both second computational nodes 26, 28 are clock-free. Thus, in simplified words, the second computational nodes 26, 28 do not have a perception of time.

However, each of the second computational nodes 26, 28 comprises a counter unit 30, 32.

Each of the counter units 30, 32 is configured for producing a sequence of counter values or impulses according to a pre-defined set of rules.

Moreover, each of the second computational nodes 26, 28 comprises means 34, 36 for carrying out a method for performing an action at a pre-defined time using a clock-free computational node. The method will be explained in detail further below.

The means 34, 36 each comprise a data storage unit 38, 40 and a data processing unit 42, 44, wherein the data storage units 38, 40 each comprise a computer-readable storage medium 46, 48 comprising instructions which, when executed by the respective data processing unit 42, 44, cause the data processing unit 42, 44 to carry out the method for performing an action at a pre-defined time.

Additionally, there is provided a computer program 50 on each of the data storage units 38, 40 comprising instructions which, when the computer program 50 is executed by the respective data processing unit 42, 44, cause the data processing unit 42, 44 to carry out the method for performing an action at a pre-defined time.

Since the computer program 50 is the same for both second computational nodes 26, 28, it is designated with the same reference sign.

The first computational node 12 is communicatively connected to the second computational node 26 via a first data connection 52.

Moreover, the first computational node 12 is communicatively connected to the second computational node 28 via a second data connection 54.

The data connections 52, 54 are bidirectional.

In the present example, the data connections are realized via a bus connection or a network connection.

In the following, an operation of the computational system 10 is described.

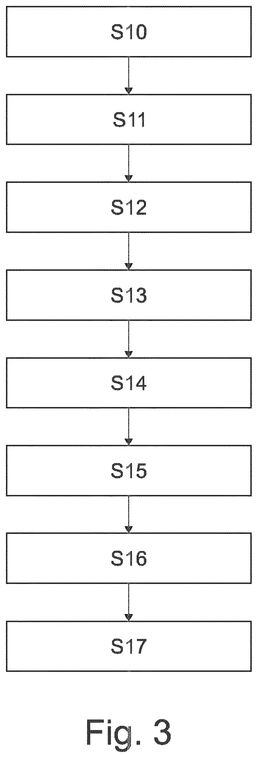

It is noted that on the first computational node 12, a method for synchronizing a clock-free computational node, in the present example the second computational nodes 26, 28, in the vehicle is performed (cf. Figure 3).

On each of the second computational nodes 26, 28, a method for performing an action at a pre-defined time using a clock-free computational node is performed (cf. Figure 2).

It is noted that in the following, a method step being performed by the first computational node 12 is to be understood as a synonym to the performance of a step of the method for synchronizing a clock-free computational node.

Analogously, a method step being performed by one of the second computational nodes 26, 28 is to be understood as a synonym to the performance of a step of the method for performing an action at a pre-defined time.

Since the first computational node 12 and the second computational nodes 26, 28 interact with each other, both methods will be explained together.

In order to have both counter units 30, 32 in a known state, both second computational nodes 26, 28 are requested to reset the respective counter unit 30, 32 by the first computational node 12.

Thus, the first computational node 12 sends a corresponding request in a step S10 of the method for synchronizing a clock-free computational node.

Both second computational nodes 26, 28 receive the reset request and reset the respective counter unit 30, 32 to zero in a step S20 of the method for performing an action at a pre-defined time.

Subsequently, in a step S11, the first computational node 12 requests a current counter value from each of the clock-free, second computational nodes 26, 28.

Both second computational nodes 26, 28 answer by sending a corresponding current counter value to the first computational node 12 in a step S21.

These current counter values are received by the first computational node in a step S12.

Moreover, the first computational node 12 receives a current time information from its clock unit 14 in a step S13.

Moreover, in a step S14, the first computational node determines a response time for each of the second computational nodes 26, 28.

The response time is the time span between requesting and receiving of the current counter value from the respective clock-free second computational node 26, 28.

The response time is indicative of a time delay being caused by the first data connection 52 and the second data connection 54 respectively.

Based on the received current counter values, the determined response times and the received time information, the first computational unit 12 generates a mapping between the current counter values and the time information in a step S15.

In the present example, the counter units 30, 32 are configured for providing a counter impulse after a pre-defined interval respectively. However, since the second computational nodes 26, 28 do not comprise a clock unit, this interval is subject to inaccuracies.

Thus, the mapping essentially comprises determining a number of counter impulses which corresponds to a given time unit, e.g. 1 second or 1 minute. Moreover, the determined response time is incorporated, i.e. a shift corresponding to the response time is generated between the current counter values and the time information.

Based on this, the first computational node 12 determines a pre-defined counter value being associated with the pre-defined time based on the mapping in a step S16. At the time when step S16 is executed, both the pre-defined counter value and the pre-defined time lie in the future.

At the pre-defined time both second computational nodes shall perform an action which is determined by the first computational node 12.

The action is described by an action identifier.

Consequently, in a step S17 a pre-defined counter value is provided to each of the clock-free second computational nodes 26, 28.

Moreover, also in step S17 the corresponding identifier is provided to each of the clock-free second computational nodes 26, 28.

Both second computational nodes 26, 28 receive the corresponding pre-defined counter value being associated with the pre-defined time in a step S22. Also the identifier describing the action to be performed is received.

Subsequently, each of the second computational nodes 26, 28 periodically compares the pre-defined counter value to a current counter value in a step S23.

If it is determined by any one of the second computational nodes 26, 28 that the current counter value equals or exceeds the pre-defined counter value, the action corresponding to the action identifier is performed by each of the second computational nodes 26, 28 in a step S24.

Optionally, the method for synchronizing a clock-free computational node in a vehicle further comprises storing all received current counter values and attribute a current time information to the received counter values. Thus, a history of counter values is stored. This history can be used when generating the mapping. For example, historic average values may be calculated based on the history.

In the following two use cases of the computational system 10 will be explained.

In the first use case, the first computational node 12 is a driver assistance control unit of the vehicle.

The second computational nodes 26, 28 each comprise a sensor unit 56, 58. Thus, the second computational nodes 26, 28 may also be designated as sensor nodes.

Both sensor units 56, 58 are configured to detect a drive state value describing a current drive state of a vehicle.

In the present use case, the sensor unit 56 is configured to detect a rotational speed of a driven wheel of the vehicle and the sensor unit 58 is configured to detect a longitudinal acceleration of the vehicle.

The action to be performed by the second computational nodes 26, 28 is to provide a detection result.

In the present use case, the detection results from the sensor units 56, 58 need to be provided at the same pre-defined time. Otherwise, the first computational node 12 being the driver assistance control unit is not able to derive useful information from the combination of the detection results.

If, for example, at the pre-defined time the sensor unit 56 provides a detection result describing a rotational speed of substantially zero and the sensor unit 58 provides a detection result describing a longitudinal acceleration exceeding zero, one may conclude that the vehicle is sliding. As a consequence thereof, the first computational node 12 being the driver assistance control unit can trigger an actuation of the brakes of the remaining wheels and/or issue a warning.

In another example, at the pre-defined time, the sensor unit 56 provides a detection result describing a rotational speed exceeding zero and the sensor unit 58 provides a detection result describing a longitudinal acceleration exceeding zero. Both detection results refer to the same orientation. Moreover, a temporal differential of the rotational speed can be calculated. Using a look up table, the first computational node 12 being the driver assistance control unit can find that the acceleration matches the temporal differential of the rotational speed. Thus, the first computational node 12 can conclude that the vehicle is perfectly under control and no further driver assistance action is necessary.

In a second use case, the first computational node 12, again, is a driver assistance control unit of the vehicle.

The second computational nodes 26, 28 each comprise an actuator unit 60, 62. Thus, the second computational nodes 26, 28 may also be designated as actuator nodes.

For the ease of representation, the actuator units 60, 62 are represented by the same elements of Figure 1 as the sensor units 56, 58. However, in reality, the actuator units 60, 62 and the sensor units 56, 58 obviously are different entities.

Both actuator units 60, 62 are configured to influence a drive state of the vehicle.

More precisely, in the present use case, the actuator unit 60 is a steering actuator of the vehicle and the actuator unit 62 is a brake actuator.

Moreover, the present use case is directed to an autonomous parking manoeuver which is controlled by the first computational node 12 being the driver assistance control unit. In this use case, a driver is responsible for accelerating the vehicle by operating the accelerator pedal. Steering and braking is performed autonomously.

It is easily understandable that in this use case, a steering action which is performed by the actuator unit 60 and a braking action which is performed by the actuator unit 62 need to be timely synchronized in order to successfully perform the parking maneuver.

It is understood, that, of course, further use cases are possible. Moreover, the use cases may be mixed.

In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: computational system
- 12: first computational node
- 14: clock unit
- 16: means for carrying out a method for synchronizing a clock-free computational node
- 18: data storage unit
- 20: data processing unit
- 22: computer-readable storage medium
- 24: computer program
- 26: second computational node
- 28: second computational node
- 30: counter unit
- 32: counter unit
- 34: means for carrying out a method for performing an action at a pre-defined time using a clock-free computational node
- 36: means for carrying out a method for performing an action at a pre-defined time using a clock-free computational node
- 38: data storage unit
- 40: data storage unit
- 42: data processing unit
- 44: data processing unit
- 46: computer-readable storage medium
- 48: computer-readable storage medium
- 50: computer program
- 52: first data connection
- 54: second data connection
- 56: sensor unit
- 58: sensor unit
- 60: actuator unit
- 62: actuator unit

## Claims

1. A method for synchronizing a clock-free computational node (26, 28) in a vehicle using a computational node (12) comprising a clock unit (14) such that the clock-free computational node (26, 28) is able to perform an action at a pre-defined time, wherein the clock-free computational node (26, 28) comprises a counter unit (30, 32) being configured for producing a sequence of counter values according to a pre-defined set of rules, the method comprising:
- receiving, by the computational node (12) comprising the clock unit (14), at least one current counter value from the clock-free computational node (26, 28) (S12),
- receiving, by the computational node (12) comprising the clock unit (14), at least one current time information from its clock unit (S13),
- generating, by the computational node (12) comprising the clock unit (14), a mapping between the at least one current counter value and the at least one current time information (S15),
- determining, by the computational node (12) comprising the clock unit (14), a pre-defined counter value being associated with the pre-defined time based on the mapping (S16), and
- providing the pre-defined counter value to the clock-free computational node (26, 28) (S17).

2. The method of claim 1, further comprising receiving or generating an action identifier describing the action to be performed.

3. The method of claim 1 or 2, further comprising requesting the clock-free computational node (26, 28) to reset the counter unit (S10).

4. The method of any one of the preceding claims, further comprising storing the received at least one current counter value.

5. The method of any one of the preceding claims, further comprising:
- requesting the at least one current counter value from the clock-free computational node (26, 28) (S11) and
- determining a response time between requesting and receiving of the at least one current counter value from the clock-free computational node (26, 28) (S14).

6. The method of claim 5, wherein generating the mapping between the at least one current counter value and the at least one current time information incorporates the determined response time.

7. A method for performing an action at a pre-defined time using a clock-free computational node (26, 28) in a vehicle, wherein the clock-free computational node (26, 28) comprises a counter unit (30, 32) being configured for producing a sequence of counter values according to a pre-defined set of rules, the method comprising:
- receiving, by the clock-free computational node, a pre-defined counter value being associated with the pre-defined time (S22),
- comparing, by the clock-free computational node, the pre-defined counter value to a current counter value (S23), and
- performing, by the clock-free computational node, the action if the current counter value equals or exceeds the pre-defined counter value (S24).

8. The method of claim 7, further comprising receiving an action identifier describing the action to be performed and performing the action corresponding to the action identifier.

9. The method of claim 7 or 8, further comprising receiving a reset request and resetting the counter unit (S20).

10. A first computational node (12) comprising a clock unit (14) and means (16) for carrying out the method of any one of claims 1 to 6.

11. The first computational node (12) of claim 10, wherein the first computational node (12) comprises a driver assistance control unit of a vehicle.

12. A second computational node (26, 28) being clock-free, the second computational node (26, 28) comprising a counter unit (30, 32) being configured for producing a sequence of counter values according to a pre-defined set of rules and means (34, 36) for carrying out the method according to any one of claims 7 to 9.

13. The second computational node (26, 28) of claim 12, wherein the second computational node (26, 28) comprises a sensor unit (56, 58) being configured to detect a drive state value describing a current drive state of a vehicle.

14. The second computational node (26, 28) of claim 12 or 13, wherein the second computational node (26, 28) comprises an actuator unit (60, 62) being configured to influence a drive state of a vehicle.

15. A computational system (10) for a vehicle, comprising a first computational node (12) according to claim 10 or 11 and at least one second computational node (26, 28) according to any one of claims 12 to 14, wherein the first computational node (12) is communicatively connected to each of the at least one second computational nodes (26, 28).

## Patentansprüche

1. Verfahren zum Synchronisieren eines taktfreien Rechenknotens (26, 28) in einem Fahrzeug unter Verwendung eines Rechenknotens (12), der eine Takteinheit (14) umfasst, dergestalt, dass der taktfreie Rechenknoten (26, 28) in der Lage ist, eine Aktion an einem vordefinierten Zeitpunkt auszuführen, wobei der taktfreie Rechenknoten (26, 28) eine Zählereinheit (30, 32) umfasst, die dazu eingerichtet ist, eine Folge von Zählerwerten gemäß einem vordefinierten Regelsatz zu erzeugen, wobei das Verfahren umfasst:
- Empfangen, durch den Rechenknoten (12), der die Takteinheit (14) umfasst, mindestens eines aktuellen Zählerwertes von dem taktfreien Rechenknoten (26, 28) (S12),
- Empfangen, durch den Rechenknoten (12), der die Takteinheit (14) umfasst, mindestens einer aktuellen Zeitinformation von seiner Takteinheit (S13),
- Generieren, durch den Rechenknoten (12), der die Takteinheit (14) umfasst, einer Zuordnung zwischen dem mindestens einen aktuellen Zählerwert und der mindestens einen aktuellen Zeitinformation (S15),
- Bestimmen, durch den Rechenknoten (12), der die Takteinheit (14) umfasst, eines vordefinierten Zählerwertes, der dem vordefinierten Zeitpunkt zugeordnet ist, auf der Grundlage der Zuordnung (S16), und
- Bereitstellen des vordefinierten Zählerwertes an den taktfreien Rechenknoten (26, 28) (S17).

2. Verfahren nach Anspruch 1, des Weiteren umfassend das Empfangen oder Generieren einer Aktionskennung, die die auszuführende Aktion beschreibt.

3. Verfahren nach Anspruch 1 oder 2, des Weiteren umfassend das Auffordern des taktfreien Rechenknotens (26, 28), die Zählereinheit (S10) zurückzusetzen.

4. Verfahren nach einem der vorangehenden Ansprüche, des Weiteren umfassend das Speichern des empfangenen mindestens einen aktuellen Zählerwertes.

5. Verfahren nach einem der vorangehenden Ansprüche, des Weiteren umfassend:
- Anfordern des mindestens einen aktuellen Zählerwertes von dem taktfreien Rechenknoten (26, 28) (S11), und
- Bestimmen einer Antwortzeit zwischen dem Anfordern und dem Empfangen des mindestens einen aktuellen Zählerwertes von dem taktfreien Rechenknoten (26, 28) (S14).

6. Verfahren nach Anspruch 5, wobei das Generieren der Zuordnung zwischen dem mindestens einen aktuellen Zählerwert und der mindestens einen aktuellen Zeitinformation die bestimmte Antwortzeit einbezieht.

7. Verfahren zum Durchführen einer Aktion an einem vordefinierten Zeitpunkt unter Verwendung eines taktfreien Rechenknotens (26, 28) in einem Fahrzeug, wobei der taktfreie Rechenknoten (26, 28) eine Zählereinheit (30, 32) umfasst, die dazu eingerichtet ist, eine Folge von Zählerwerten gemäß einem vordefinierten Regelsatz zu erzeugen, wobei das Verfahren umfasst:
- Empfangen, durch den taktfreien Rechenknoten, eines vordefinierten Zählerwertes, der dem vordefinierten Zeitpunkt zugeordnet ist (S22),
- Vergleichen, durch den taktfreien Rechenknoten, des vordefinierten Zählerwertes mit einem aktuellen Zählerwert (S23), und
- Durchführen, durch den taktfreien Rechenknoten, der Aktion, falls der aktuelle Zählerwert gleich dem vordefinierten Zählerwert ist oder ihn überschreitet (S24).

8. Verfahren nach Anspruch 7, des Weiteren umfassend das Empfangen einer Aktionskennung, die die durchzuführende Aktion beschreibt, und das Durchführen der der Aktionskennung entsprechenden Aktion.

9. Verfahren nach Anspruch 7 oder 8, des Weiteren umfassend das Empfangen einer Rücksetzanforderung und das Zurücksetzen der Zählereinheit (S20).

10. Erster Rechenknoten (12), umfassend eine Takteinheit (14) und ein Mittel (16) zum Ausführen des Verfahrens nach einem der Ansprüche 1 bis 6.

11. Erster Rechenknoten (12) nach Anspruch 10, wobei der erste Rechenknoten (12) eine Fahrerassistenzsteuereinheit eines Fahrzeugs umfasst.

12. Zweiter Rechenknoten (26, 28), der taktfrei ist, wobei der zweite Rechenknoten (26, 28) eine Zählereinheit (30, 32), die dazu eingerichtet ist, eine Folge von Zählerwerten gemäß einem vordefinierten Regelsatz zu generieren, und ein Mittel (34, 36) zum Ausführen des Verfahrens nach einem der Ansprüche 7 bis 9 umfasst.

13. Zweiter Rechenknoten (26, 28) nach Anspruch 12, wobei der zweite Rechenknoten (26, 28) eine Sensoreinheit (56, 58) umfasst, die dazu eingerichtet ist, einen Fahrzustandswert zu detektieren, der einen aktuellen Fahrzustand eines Fahrzeugs beschreibt.

14. Zweiter Rechenknoten (26, 28) nach Anspruch 12 oder 13, wobei der zweite Rechenknoten (26, 28) eine Aktuatoreinheit (60, 62) umfasst, die dazu eingerichtet ist, einen Fahrzustand eines Fahrzeugs zu beeinflussen.

15. Rechensystem (10) für ein Fahrzeug, umfassend einen ersten Rechenknoten (12) nach Anspruch 10 oder 11 und mindestens einen zweiten Rechenknoten (26, 28) nach einem der Ansprüche 12 bis 14, wobei der erste Rechenknoten (12) kommunikativ mit jedem des mindestens einen zweiten Rechenknotens (26, 28) verbunden ist.

## Revendications

1. Procédé pour synchroniser un nœud de calcul sans horloge (26, 28) dans un véhicule à l'aide d'un nœud de calcul (12) comprenant une unité d'horloge (14) de telle sorte que le nœud de calcul sans horloge (26, 28) est capable d'exécuter une action à un instant prédéfini, dans lequel le nœud de calcul sans horloge (26, 28) comprend une unité de compteur (30, 32) étant configurée pour générer une séquence de valeurs de compteur en fonction d'un ensemble prédéfini de règles, le procédé comprenant de :
- recevoir, par le nœud de calcul (12) comprenant l'unité d'horloge (14), au moins une valeur de compteur actuelle à partir du nœud de calcul sans horloge (26, 28) (S12),
- recevoir, par le nœud de calcul (12) comprenant l'unité d'horloge (14), au moins une information de temps actuelle à partir de son unité d'horloge (S13),
- générer, par le nœud de calcul (12) comprenant l'unité d'horloge (14), une mise en correspondance entre ladite au moins une valeur de compteur actuelle et ladite au moins une information de temps actuelle (S15),
- déterminer, par le nœud de calcul (12) comprenant l'unité d'horloge (14), une valeur de compteur prédéfinie étant associée à l'instant prédéfini sur la base de la mise en correspondance (S16), et
- fournir la valeur de compteur prédéfinie au nœud de calcul sans horloge (26, 28) (S17).

2. Procédé selon la revendication 1, comprenant en outre de recevoir ou de générer un identifiant d'action décrivant l'action à exécuter.

3. Procédé selon la revendication 1 ou 2, comprenant en outre de demander au nœud de calcul sans horloge (26, 28) de réinitialiser l'unité de compteur (S10).

4. Procédé selon l'une quelconque des revendications précédentes, comprenant en outre de stocker ladite au moins une valeur de compteur actuelle reçue.

5. Procédé selon l'une quelconque des revendications précédentes, comprenant en outre de :
- demander ladite au moins une valeur de compteur actuelle au nœud de calcul sans horloge (26, 28) (S11) et
- déterminer un temps de réponse entre la demande et la réception de ladite au moins une valeur de compteur actuelle à partir du nœud de calcul sans horloge (26, 28) (S14).

6. Procédé selon la revendication 5, dans lequel la génération de la mise en correspondance entre ladite au moins une valeur de compteur actuelle et ladite au moins une information de temps actuelle incorpore le temps de réponse déterminé.

7. Procédé pour exécuter une action à un instant prédéfini à l'aide d'un nœud de calcul sans horloge (26, 28) dans un véhicule, dans lequel le nœud de calcul sans horloge (26, 28) comprend une unité de compteur (30, 32) étant configurée pour générer une séquence de valeurs de compteur en fonction d'un ensemble prédéfini de règles, le procédé comprenant de :
- recevoir, par le nœud de calcul sans horloge, une valeur de compteur prédéfinie étant associée à l'heure prédéfinie (S22),
- comparer, par le nœud de calcul sans horloge, la valeur de compteur prédéfinie à une valeur de compteur actuelle (S23), et
- exécuter, par le nœud de calcul sans horloge, l'action si la valeur de compteur actuelle est égale à la valeur de compteur prédéfinie (S24) ou dépasse celle-ci.

8. Procédé selon la revendication 7, comprenant en outre de recevoir un identifiant d'action décrivant l'action à exécuter et d'exécuter l'action correspondant à l'identifiant d'action.

9. Procédé selon la revendication 7 ou 8, comprenant en outre de recevoir une demande de réinitialisation et de réinitialiser l'unité de compteur (S20).

10. Premier nœud de calcul (12) comprenant une unité d'horloge (14) et un moyen (16) pour mettre en œuvre le procédé selon l'une quelconque des revendications 1 à 6.

11. Premier nœud de calcul (12) selon la revendication 10, dans lequel le premier nœud de calcul (12) comprend une unité de commande d'aide à la conduite d'un véhicule.

12. Second nœud de calcul (26, 28) étant sans horloge, le second nœud de calcul (26, 28) comprenant une unité de compteur (30, 32) étant configurée pour générer une séquence de valeurs de compteur en fonction d'un ensemble prédéfini de règles, et un moyen (34, 36) pour mettre en œuvre le procédé selon l'une quelconque des revendications 7 à 9.

13. Second nœud de calcul (26, 28) selon la revendication 12, dans lequel le second nœud de calcul (26, 28) comprend une unité de capteur (56, 58) étant configurée pour détecter une valeur d'état de conduite décrivant un état de conduite actuel d'un véhicule.

14. Second nœud de calcul (26, 28) selon la revendication 12 ou 13, dans lequel le second nœud de calcul (26, 28) comprend une unité d'actionneur (60, 62) étant configurée pour influencer un état de conduite d'un véhicule.

15. Système de calcul (10) pour un véhicule, comprenant un premier nœud de calcul (12) selon la revendication 10 ou 11 et au moins un second nœud de calcul (26, 28) selon l'une quelconque des revendications 12 à 14, dans lequel le premier nœud de calcul (12) est relié en communication à chacun dudit au moins un second nœud de calcul (26, 28).
